# EUROPEAN PATENT SPECIFICATION

(11) **EP 2 819 875 B1**
(45) Date of publication and mention of the grant of the patent: **09.10.2019**
(21) Application number: 12823155.2
(22) Date of filing: 28.11.2012
(51) Int. Cl.: B60L 53/00

(54) **ENERGY ABSORBING SYSTEM FOR ELECTRIC VEHICLE CHARGING STATION AND METHODS FOR MAKING AND USING THE SAME**
ENERGIEABSORPTIONSSYSTEM FÜR DIE LADESTATION EINES ELEKTROFAHRZEUGS UND VERFAHREN ZU IHRER HERSTELLUNG UND VERWENDUNG
SYSTÈME D'ABSORPTION D'ÉNERGIE POUR STATION DE CHARGE DE VÉHICULE ÉLECTRIQUE ET PROCÉDÉS DE FABRICATION ET D'UTILISATION DE CE SYSTÈME

(30) Priority: 29.02.2012 US 201213408420
(43) Date of publication of application: 07.01.2015
(73) Proprietor: SABIC Global Technologies B.V., 4612 PX Bergen op Zoom (NL)
(72) Inventor: KULKARNI, Sandeep Chandrakant, Kundalahalli Bangalore 560037 (IN); MARUR, Sudhakar Ramamoorthy, Karnataka Bangalore 560047 (IN); KUSHALAPPA, Poovanna Theethira, Bangalore 560102 (IN)
(74) Representative: Stiebe, Lars Magnus
(86) International application number: PCT/IB2012/056776
(87) International publication number: WO 2013/128249

(56) References cited:
- WO-A1-2005/075745
- WO-A1-2005/090687
- DE-A1-102009 016 505
- DE-C1- 4 344 563
- DE-U1-202010 005 543
- Teo Biocina: "Volta EV Charging Station", , 1 January 2011 (2011-01-01), XP002723409, Retrieved from the Internet: URL:http://teobiocina.com/Volta-EV-Chargin g-Station [retrieved on 2014-04-16]

## Description

### TECHNICAL FIELD

The present disclosure relates to an energy absorbing system for electric vehicle charging stations and associated elements.

### BACKGROUND

Recent awareness of human impact on environmental pollution has propelled the need to develop environmentally friendly alternatives to gasoline powered vehicles such as electric vehicles. For example, the continued economic development of India, China, and Brazil will lead to a staggering increase in the number of vehicles on the world's roads. If present trends continue, there will be an estimated 2.5 billion vehicles on the road by 2050, which is an increase from the nearly 600 million present in 2010. With an erratic oil supply and increased environmental changes associated with fossil fuel burning, electrification of short-haul transportation is an attractive alternative (e.g., electrically powered vehicles).

With more electric vehicles on the roads, an infrastructure will need to be built to charge these electric vehicles. For example, it is projected that about 4.7 million charging stations, will be installed in various locations worldwide between 2010 and 2015. With an estimated cost of $2,500 per charging station and the potential for damage due to driver error, these Electric Vehicle Charging Stations (EVCS) need to be safeguarded and protected from damage, e.g., damage caused by a collision with a parking vehicle.

A charging station with a protective rubber layer which serves as a shield against bumps is disclosed in the Volta charging station, XP002723409. WO2005/075745 discloses a safety protection for road barriers.

### SUMMARY

Disclosed herein are energy absorbing electric vehicle charging stations (EVCS), and methods for making and using the same, according to claim 1 and claim 12.

In one embodiment, an electric vehicle charging station comprises: a base and a body extending from the base along a major axis of the electric vehicle charging station; and an energy absorbing system comprising a first wall, a second wall, and a connecting wall disposed therebetween the first wall and the second wall creating a compartment; wherein the body receives the energy absorbing system; and wherein the energy absorbing system is configured to engage an impacting object.

In another embodiment, an electric vehicle charging station, comprises: a base and a body extending from the base along a major axis of the electric vehicle charging station; and an energy absorbing system comprising a first energy absorbing element and a second energy absorbing element, wherein the first energy element and the second energy absorbing element are attached at an end of each element, and wherein the first energy absorbing element has a first mating surface that is complimentary to a second mating surface on the second energy absorbing element at a distal end.

In another embodiment, an electric vehicle charging station comprises: a base; and a body extending from the base along a major axis of the electric vehicle charging station, wherein the body comprises an energy absorbing system comprising a first wall, a second wall, and a connecting wall disposed therebetween the first wall and the second wall creating a compartment; wherein the energy absorbing system is configured to engage an impacting object.

In one embodiment, a method of protecting an electric vehicle charging station, comprises: attaching an energy absorbing system to a body of an electric vehicle charging station, wherein the energy absorbing system comprises a first wall, a second wall, and a connecting wall disposed therebetween the first wall and the second wall creating a compartment, the first wall of the energy absorbing system is configured to engage an impacting object.

The foregoing and other features of the present disclosure will be more readily apparent from the following detailed description and drawings of the illustrative examples.

### BRIEF DESCRIPTION OF THE DRAWINGS

The following is a brief description of the drawings wherein like numbers are numbered alike and which are presented for purposes of illustrating the exemplary embodiments disclosed herein and not for the purposes of limiting the same.
FIG. 1 is a schematic drawing of an electric vehicle charging station comprising an energy absorbing system.
FIG. 2 is a schematic drawing of an electric vehicle charging station comprising an energy absorbing system.
FIG. 3 illustrates a top view of an electric vehicle charging station with the energy absorbing system of FIG. 1.
FIG. 4 is a top view illustrating an assembled energy absorbing system.
FIG. 5 is an isometric perspective view of the energy absorbing system of FIG. 4 fitted around an electric vehicle charging station.
FIG. 6 illustrates a schematic view of an electric vehicle charging station comprising the energy absorbing system of FIG. 4.
FIG. 7 illustrates an isometric perspective view of an embodiment of an energy absorbing system.
FIG. 8 illustrates an isometric perspective view of another embodiment of an electric vehicle charging station comprising an energy absorbing system.
FIG. 9 is an isometric side view illustrating the point of impact of a vehicle bumper with an electric vehicle charging station without an energy absorbing system.
FIG. 10 is an isometric side view illustrating the point of impact of a vehicle bumper with an electric vehicle charging station equipped with an energy absorbing system.
FIG. 11 is an isometric perspective view of an electric vehicle charging station having a body comprising an energy absorbing system.
FIG. 12 is a top view of the energy absorbing system of the body of FIG. 11.
FIG. 13 illustrates an energy versus time distribution curve of an electric vehicle charging station having the design of FIG. 2 following an 8 kilometers per hour collision.
FIG. 14 shows a force deformation curve of an electric vehicle charging station having an energy absorbing system with the design of FIG. 2 following an 8kph collision.
FIG. 15 illustrates an energy versus time distribution curve of an electric vehicle charging station having the design of FIG. 8 following an 8 kilometers per hour collision.
FIG. 16 shows a force deformation curve of an electric vehicle charging station having an energy absorbing system with the design of FIG. 8 following an 8kph collision.
FIG. 17 illustrates an energy versus time energy distribution curve of an electric vehicle charging station having the design of FIG. 12 following an 8 kilometers per hour collision.
FIG. 18 shows a force deformation curve of an electric vehicle charging station having an energy absorbing system with the design of FIG. 12 following an 8kph collision.

### DETAILED DESCRIPTION

Disclosed herein are energy absorbing systems that can protect electric vehicle charging stations from damage due to a collision with an impacting body (e.g., a vehicle that is being parked and crashes into the electric vehicle charging station). If the energy absorbing systems comprise a polymeric or composite material, advantages such as design freedom, increased performance, light weight systems, enhanced aesthetic appeal, and ease of assembly can be realized. The energy absorbing system can be easily assembled around or on an electric vehicle charging station and easily replaced or repaired if needed. The energy absorbing systems can be installed around and or in an electric vehicle charging station and can be configured to absorb energy caused by any impacting body and can ensure that the electric vehicle charging station is not damaged. For example, the energy absorbing systems can absorb a range of impact energy of 500 Joules to 2,000 Joules without damage to the internal components (e.g., electrical components) of the electric vehicle charging station. An advantage of the energy absorbing systems described herein can also be the mitigation of damageability of impacting vehicles.

Energy absorbing systems comprising energy absorbing elements can, optionally, be polymer based and fitted around electric vehicle charging stations (EVCS). Electric vehicle charging stations can generally be described as having a body defining a major axis extending from a base upward. The energy absorbing elements can contain reflective surfaces to increase visibility and can also optionally, be formed from a substantially flexible sheet that can be capable of being adhered to and/or operably coupled to the body of an electric vehicle charging station. The body of the electric vehicle charging station can be covered completely or partially, provided that docking elements and controls are available to a user. In certain embodiments, the electric vehicle charging station can have a cross section along its major axis comprising any polygonal shape including a 3-sided polygon to a circular shape. Likewise, the location of the energy absorbing system on the base of the electric vehicle charging station can be configured to engage a wide array of vehicle bumpers. For example, an energy absorbing system can cover 2% to 99% of the electric vehicle charging station's major axis, specifically 5% to 95%, more specifically, 10% to 75%, and even more specifically, 25% to 50%, and any and all ranges and endpoints therebetween. Accordingly, provided herein is an energy absorbing system, that can be configured to cover a portion of an electric vehicle charging station, with the energy absorbing element comprising a first wall, a second wall, and a connecting wall (e.g., partition wall) disposed therebetween.

In an energy absorbing system when multiple energy absorbing elements are used, the individual elements can be stacked on top of one another or, optionally, can be removably attached to one another, such that an individual element can be removed if desired without having to remove the entire energy absorbing system or alternatively, the energy absorbing elements can be integral with one another (e.g., irremovably attached to one another) so that removal of an energy absorbing element cannot be accomplished without removing the energy absorbing assembly and/or damaging the energy absorbing assembly. When greater than one energy absorbing elements are used, as mentioned, the energy absorbing elements can be stacked on one another. In some embodiments, the energy absorbing elements can be in communication with each other (e.g., touching); in other embodiments, an opening can be present between energy absorbing elements. The size of the opening is not limited and can be of any size that will not allow a vehicle bumper to contact the body of the electric vehicle charging station upon an impact.

The energy absorbing system can be formed by various methods including but not limited to injection molding, extrusion, thermoforming, compression molding, blow molding, and combinations comprising at least one of the foregoing. In certain circumstances the energy absorbing system can have individual components that are formed by injection molding, extrusion, thermoforming, compression molding, or blow molding and combinations comprising at least one of the foregoing.

As used herein, an electric vehicle charging station refers to an apparatus, including hardware and software, to charge electrical vehicles. A charging station is typically a device or apparatus that supplies electric energy for the recharging of an electric vehicle, plug-in hybrid electric-gasoline vehicles' batteries or capacitors. Such devices can store and communicate (internally and with other devices over a network) code and data using machine-readable media, such as machine storage media (e.g., magnetic disks; optical disks; random access memory; read only memory; flash memory devices; phase-change memory, etc.) and machine communication media (e.g., electrical, optical, acoustical or other forms of propagated signals such as carrier waves, infrared signals, digital signals, etc.). In addition, electric vehicle charging stations also generally include a processor coupled to another component, such as a storage device, and/or input/output device (e.g., a keyboard, a touchscreen, and/or a display), and/or a network connection. The coupling of the processor and other components can generally be through one or more busses and bridges (e.g., bus controllers). The storage device and signals carrying the network traffic, respectively, represent a machine storage media and/or a machine communication media. Thus, the storage device of a given device generally stores code and/or other data for execution on the processor of that device. Electric vehicle charging station as described herein can generally refer to electric vehicle charging stations that are attached to a substrate (e.g., a wall, a sidewalk, the ground, a curb, etc.).

Electric vehicle charging stations can be inherently dangerous because of the risk of exposure to high voltage if the electric vehicle charging station is damaged. With millions of charging stations planned for deployment throughout the world, the likelihood that an electric vehicle charging station will be impacted by an object or vehicle, or subjected to vandalism or attempted theft, also increases significantly. An injury risk involves exposure to the high voltage electrical feed that powers the electric vehicle charging station where, exposure is possible in the event of an accident, impact, incident, or act of vandalism. Contact with a live high voltage/high current feed (e.g., 240 or 480volts, 32 Amperes) presents an electrical shock or electrocution hazard, and can, under certain circumstances, cause explosion of a vehicle as well as injuries to bystanders and pedestrians.

The energy absorbing system can generally comprise a polymeric material. For example, the energy absorbing system can comprise any thermoplastic material or combination of thermoplastic materials that can be formed into the desired shape and provide the desired properties, e.g., a material capable of elastic deformation without loss of structural integrity.

Exemplary materials include thermoplastic materials as well as combinations of thermoplastic materials with elastomeric materials, and/or thermoset materials, and/or composite materials, and/or foam materials. Possible thermoplastic materials include polybutylene terephthalate (PBT); acrylonitrile-butadiene-styrene (ABS); polycarbonate (LEXAN* and LEXAN* EXL resins, commercially available from SABIC Innovative Plastics); polycarbonate/PBT blends; polycarbonate/ABS blends; copolycarbonate-polyesters; acrylic-styrene-acrylonitrile (ASA); acrylonitrile-(ethylene-polypropylene diamine modified)-styrene (AES); phenylene ether resins; blends of polyphenylene ether/polyamide (NORYL GTX* resins, commercially available from SABIC Innovative Plastics); blends of polycarbonate/polyethylene terephthalate (PET)/PBT; polybutylene terephthalate and impact modifier (XENOY* resins, commercially available from SABIC Innovative Plastics); polyamides; phenylene sulfide resins; polyvinyl chloride PVC; high impact polystyrene (HIPS); low/high density polyethylene (L/HDPE); polypropylene (PP); expanded polypropylene (EPP); polyethylene and fiber composites; polypropylene and fiber composites (AZDEL Superlite* sheets, commercially available from Azdel, Inc.); long fiber reinforced thermoplastics (VERTON* resins, commercially available from SABIC Innovative Plastics) and thermoplastic olefins (TPO), as well as combinations comprising at least one of the foregoing.

An exemplary filled resin is STAMAX* resin, which is a long glass fiber filled polypropylene resin also commercially available from SABIC Innovative Plastics. Some possible reinforcing materials include fibers, such as glass, carbon, and so forth, as well as combinations comprising at least one of the foregoing; e.g., long glass fibers and/or long carbon fiber reinforced resins. The energy absorbing system can also be formed from combinations comprising at least one of any of the above-described materials. The energy absorbing assembly can be manufactured utilizing various molding processes (e.g., injection molding, thermoforming, extrusion, etc.) to provide an energy absorbing assembly. The energy absorbing elements described herein can also be formed by extrusion of an elongated tube comprising a first wall, a second wall, and a connecting wall disposed therebetween; and later cut to size.

The overall size, e.g., the specific dimensions of the energy absorbing system will depend upon the size of the electric vehicle charging station to which it will attach.

As will be described in further detail, portions of the energy absorbing system can be filled with an energy absorbing material such as a foam material. The foam can provide additional energy absorption during an impact. The foam material can be formed from a foam comprising a variety of polymers, including, but not limited to, polyphosphazenes, poly(vinyl alcohols), polyamides, polyester amides, poly(amino acid)s, polyanhydrides, polycarbonates, polyacrylates, polyalkylenes, polyacrylamides, polyalkylene glycols, polyalkylene oxides, polyalkylene terephthalates, polyortho esters, polyvinyl ethers, polyvinyl esters, polyvinyl halides, polyesters, polylactides, polyglycolides, polysiloxanes, polyurethanes, polyethers, polyether amides, polyether esters, poly(methyl methacrylate), poly(ethyl methacrylate), poly(butyl methacrylate), poly(isobutyl methacrylate), poly(hexyl methacrylate), poly(isodecyl methacrylate), poly(lauryl methacrylate), poly(phenyl methacrylate), poly(methyl acrylate), poly(isopropyl acrylate), poly(isobutyl acrylate) and poly(octadecyl acrylate), polystyrene, polypropylene (PP), expanded polypropylene (EPP), polyvinyl phenol, polyvinylpyrrolidone, chlorinated polybutylene, poly(octadecyl vinyl ether), ethylene vinyl acetate, (expanded) polyethylene (EPE), poly(ethylene oxide)-poly(ethylene terephthalate), polyethylene/nylon (graft copolymer), polycaprolactones-polyamide (block copolymer), poly(caprolactone) dimethacrylate-n-butyl acrylate, poly(norbornyl-polyhedral oligomeric silsequioxane), polyurethane, polystyrene, polyvinylchloride, urethane/butadiene copolymers, polyurethane block copolymers, styrenebutadiene-styrene block copolymers, as well as combinations comprising at least one of the foregoing. The foam can also be formed from any of the materials listed with respect to the energy absorber as well as combinations comprising at least one of the foregoing.

In an embodiment, the foam can be a closed-cell foam or an open-cell foam (where open and closed refer to the determination of the open-cell volume percent content in the polymeric cellular material as measured according to ASTM D6226-05) or a combination thereof. Accordingly the foam used in the energy absorbing systems described herein can comprise several layers of foam with varying densities (e.g., can comprise both closed cell foam and open cell foam).

Alternatively, or in addition, the foam material can comprise a syntactic foam, e.g., a foam including hollow spheres embedded in a matrix comprising a polymer such as previously described. Syntactic foams are composite materials synthesized by filling a metal, polymer, or ceramic matrix with hollow particles called microballoons. The presence of hollow particles results in lower density, higher strength, and a lower thermal expansion coefficient. Tailorability is one of the biggest advantages of these materials. The matrix can be selected from any metal, polymer, or ceramic material. Examples of microballoons include cenospheres, glass microspheres, carbon microballoons, and polymer microballoons. Instead of microballoons, other fillers such as titanium dioxide, barium sulfate, silicon dioxide, silicone spheres, or microspheres (e.g., TOSPEARL*), polymethylmethacrylates particles, or the like, or a combination comprising at least one of the foregoing.

The compressive properties of syntactic foams primarily depend on the properties of microballoons, whereas the tensile properties depend on the matrix material that holds the microballoons together. There are several methods of adjusting the properties of the syntactic foams. The first method is to change the volume fraction of microballoon in the syntactic foam structure. The second method is to use microballoons of different wall thickness. In general, the compressive strength of the material is proportional to its density.

Glass microspheres can be made by heating tiny droplets of dissolved water glass in a process known as ultrasonic spray pyrolysis. Microspheres are also used in composite to fill polymer resins for specific characteristics such as weight, sandability, and sealing surfaces.

The spheres in the syntactic foam, which can be formed from glass, ceramic, polymers, and combinations comprising at least one of the foregoing, can have a diameter of 100 nanometers (nm) to 5 millimeters (mm), specifically, 500 nm to 1,000 nm, more specifically, 1 micrometer (µm) to 300 µm, and even more specifically, 10 µm to 200 µm. Variable densities of the syntactic foam can be attained by filling a mold with spheres of varying diameter and with molten thermoplastic material. The density of the foam can also be varied by varying the closed-cell fraction of the foam. Accordingly, the foam material can comprise a layer of syntactic foam, where the syntactic foam has a continuous density throughout or has a varying density as described. Optionally, the foam can comprise several layers of foam.

The foam can be formed by a mechanical forming process (e.g., polyurethane foams) or by the use of blowing agents (e.g., polyolefin foams). Blow agents can be classified as physical blowing agents or chemical blowing agents. When using a physical blowing agent, foaming can be achieved by allowing the expansion of gases that are dissolved or suspended in a molten polymer by reducing the pressure. When using a chemical foaming agent, the cell structure can be formed by chemical decomposition of a blowing agent. In a mechanical foaming process, the foam structure can be achieved by mechanically trapping the gasses in the structure, e.g., air can be trapped through rigorous whipping of polymer slurry using appropriate mixers. The foam stage can be formed from any of the processes, as well as combinations comprising at least one of the foregoing.

When using a physical blowing agent, the foam can be formed by immersing a polymeric foaming solution with foaming gas under high pressure at a temperature higher than the glass transition temperature of the polymer or its blend to form a homogeneous system. The pressure is then rapidly released to generate an unstable over-saturated system so that the gas dissolved in the polymeric foaming solution can nucleate and separate bubbles out until it attains equilibrium between the bubble pressure, strength of the polymeric material, and finally the polymeric solution solidifies to obtain the polymeric foam. In one embodiment, carbon dioxide (CO₂) or nitrogen (N₂) gas can be used as the foaming gas. Since homogeneous nucleation generally requires higher energy and since it has fewer nucleating sites than heterogeneous nucleation, which results in a larger cell size in the resultant foam, the nucleating energy can be reduced by adding a nucleating agent to increase the nucleating sites during the foaming process and thus provide a heterogeneous nucleation for the foaming gas contained in the polymeric solution. The various properties (e.g., physical properties such as diameter) of the foam used in the energy absorbing assemblies described herein can be influenced by the kinds of nucleating agent used, and/or the temperature/pressure profile used to make the foam, and/or the foaming gas used. Foams can be formed by an extruding-forming process, in which the polymer is heated and melted; a nucleating agent and a foaming agent are added into the molten polymer or polymer blend; the mixture is blended into a polymeric foaming solution; and the polymeric foaming solution is extruded and foamed at an appropriate temperature to form the foam.

Examples of physical blowing agents are those comprising hydrogen atom-containing components, which can be used alone or as mixtures with each other or with another type of blowing agent such as water or azo compounds. These blowing agents can be selected from a broad range of materials, including hydrocarbons, ethers, esters, and partially halogenated hydrocarbons, ethers and esters, and the like. Physical blowing agents generally have a boiling point of about -50°C to about 100°C, and specifically about -25°C to about 50°C. Among the usable hydrogen-containing blowing agents are the HCFC's (halo chlorofluorocarbons) such as 1,1-dichloro-1-fluoroethane, 1,1-dichloro-2, 2,2-trifluoroethane, monochlorodifluoromethane, and 1-chloro-1,1-difluoroethane; the HFCs (halo fluorocarbons) such as 1,1,1,3,3,3-hexafluoropropane, 2,2,4,4-tetrafluorobutane, 1,1,1,3,3,3-hexafluoro-2-methylpropane, 1,1,1,3,3-pentafluoropropane, 1,1,1,2,2-pentafluoropropane, 1,1,1,2,3-pentafluoropropane, 1,1,2,3,3-pentafluoropropane, 1,1,2,2,3-pentafluoropropane, 1,1,1,3,3,4-hexafluorobutane, 1,1,1,3,3-pentafluorobutane, 1,1,1,4,4,4-hexafluorobutane, 1,1,1,4,4-pentafluorobutane, 1,1,2,2,3,3-hexafluoropropane, 1,1,1,2,3,3-hexafluoropropane, 1,1-difluoroethane, 1,1,1,2-tetrafluoroethane, and pentafluoroethane; the HFE's (halo fluoroethers) such as methyl-1,1,1-trifluoroethylether and difluoromethyl-1,1,1-trifluoroethylether; and the hydrocarbons such as n-pentane, isopentane, and cyclopentane, and combinations comprising at least one of the foregoing.

Included among the normally gaseous and liquid blowing agents are the halogen derivatives of methane and ethane, such as methyl fluoride, methyl chloride, difluoromethane, methylene chloride, perfluoromethane, trichloromethane, difluorochloromethane, dichlorofluoromethane, dichlorodifluoromethane (CFC-12), trifluorochloromethane, trichloromonofluoromethane (CFC-11), ethyl fluoride, ethyl chloride, 2,2, 2-trifluoro-1,1-dichloroethane (HCFC-123), 1,1,1-trichloroethane, difluorotetrachloroethane, 1,1-dichloro-1-fluoroethane (HCFC-141b), 1,1-difluoro-1-chloroethane (HCFC-142b), dichlorotetrafluoroethane (CFC-114), chlorotrifluoroethane, trichlorotrifluoroethane (CFC-113), 1-chloro-1,2,2, 2-tetrafluoroethane (HCFC-124), 1,1-difluoroethane (HFC-152a), 1,1,1-trifluoroethane (HFC-143a), 1,1,1,2-tetrafluoroethane (HFC-134a), perfluoroethane, pentafluoroethane, 2,2-difluoropropane, 1,1,1-trifluoropropane, perfluoropropane, dichloropropane, difluoropropane, chloroheptafluoropropane, dichlorohexafluoropropane, perfluorobutane, perfluorocyclobutane, sulfur-hexafluoride, and combinations comprising at least one of the foregoing.

Other normally gaseous and liquid blowing agents that may be employed are hydrocarbons and other organic compounds such as acetylene, ammonia, butadiene, butane, butene, isobutane, isobutylene, dimethylamine, propane, dimethylpropane, ethane, ethylamine, methane, monomethylamine, trimethylamine, pentane, cyclopentane, hexane, propane, propylene, alcohols, ethers, ketones, and the like. Inert gases and compounds, such as carbon dioxide, nitrogen, argon, neon, or helium, may be used as blowing agents with satisfactory results. A physical blowing agent may be used to produce foam directly out of the extrusion die. The composition may optionally include chemical foaming agents for further expansion. Exemplary physical blowing agents are carbon dioxide and nitrogen.

Solid, chemical blowing agents, which decompose at elevated temperatures to form gases, may be used. In general, the decomposable foaming agent will have a decomposition temperature (with the resulting liberation of gaseous material) of about 130°C to about 350°C. Representative chemical blowing agents include azodicarbonamide, p,p'-oxybis (benzene) sulfonyl hydrazide, p-toluene sulfonyl hydrazide, p-toluene sulfonyl semicarbazide, 5-phenyltetrazole, ethyl-5-phenyltetrazole, dinitroso pentamethylenetetramine, and other azo, N-nitroso, carbonate and sulfonyl hydrazides as well as various acid/bicarbonate compounds, which decompose when heated.

In one embodiment, the cells of the polymeric foams can have a cell size of 0.1 micrometers to 100 micrometers, specifically 1 micrometer to 80 micrometers, and more specifically 5 to 50 micrometers.

A more complete understanding of the components, processes, and apparatuses disclosed herein can be obtained by reference to the accompanying drawings. These figures (also referred to herein as "FIG.") are merely schematic representations based on convenience and the ease of demonstrating the present disclosure, and are, therefore, not intended to indicate relative size and dimensions of the devices or components thereof and/or to define or limit the scope of the exemplary embodiments. Although specific terms are used in the following description for the sake of clarity, these terms are intended to refer only to the particular structure of the embodiments selected for illustration in the drawings, and are not intended to define or limit the scope of the disclosure. In the drawings and the following description below, it is to be understood that like numeric designations refer to components of like function.

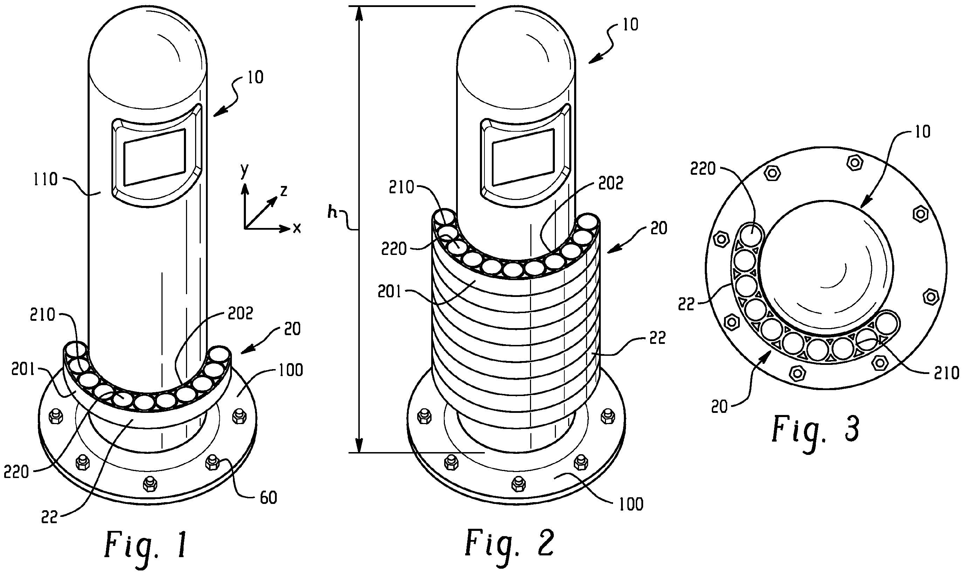

Turning now to Figures 1 to 3, which are not part of the invention, an electric vehicle charging station (10) for charging an electric vehicle having an energy absorbing system (20) attached thereto is illustrated. The electric vehicle charging station (10) can have a base (100) that is configured to attach to a surface so that the electric vehicle charging station (10) can be locked into place (e.g., cannot be moved or stolen by a passerby or user). The base (100) of the electric vehicle charging station (10) can have attachment members (60) (e.g., a bolt and nut, screw, nail, etc.) that can attach the base (100) of the electric vehicle charging station (10) to the surface (e.g., a sidewalk, roadway, platform, wall, curb, ground, etc.). As further illustrated in Figures 1 to 3, the base (100) can have a body (110) extending vertically upward from the base (100) in a direction of the major axis of the body (110) (i.e., the y direction of the x, y, z axis illustrated in Figure 1) where the body (110) can be capable of receiving an energy absorbing system (20). The energy absorbing system (20) can comprise a first wall (201); a second wall (202) generally oriented toward the body (110) of the electric vehicle charging station (10) and connecting walls (210) (e.g., partition walls 210) disposed therebetween the first wall (201) and the second wall (202). The connecting walls (210) can create discrete compartments (220) of varying shapes and sizes. The compartments (220) can be hollow or can, optionally, be filled with an energy absorbing material that can provide further energy absorbing capabilities to the energy absorbing system (20). Any number of the compartments (220) can be filled with an energy absorbing material. For example, a portion of the energy absorbing system (20) that is more susceptible to damage (e.g., the portion that faces the street and/or parking spot) can be filled with an energy absorbing material, such as a foam. In other embodiments, every other compartment (220) can be filled with the energy absorbing material.

The energy absorbing system (20) can be configured to cover a portion of the body (110) of the electric vehicle charging station (10). For example, the energy absorbing system (20) can cover 2% to 99% of the electric vehicle charging station's major axis (y in Figure 1), specifically 5% to 95%, more specifically, 10% to 75%, and even more specifically, 25% to 50%, and any and all ranges and endpoints therebetween. The shape of the body (110) is not limited and can generally be any shape that will allow it to function as an electric vehicle charging station (10). For example, the body (110) can have a shape that is square, rectangular, cylindrical, elliptical, trapezoidal, hexagonal, pentagonal, octagonal, and the like, as well as combinations comprising at least one of the foregoing. As illustrated in Figures 1-3, the body (110) can have a cylindrical shape with the energy absorbing system (20) dispersed around a portion of the circumference of the body (110).

As shown in Figure 2, the energy absorbing system (20) can comprise greater than or equal to one energy absorbing element (22) that can be stacked on one another and dispersed around a portion the body (110) of the electric vehicle charging station (10) to cover a larger portion of the body height (h) of the electrical vehicle charging station (10). The energy absorbing system (20) can generally be configured to engage an impacting object (e.g., vehicle) if and when necessary and provide protection to the electric vehicle charging station (10) from damage. As mentioned, the energy absorbing elements (22) can be placed on one another and dispersed around a portion of the body. For example, as illustrated in Figures 1 to 6, the energy absorbing elements (22) can be dispersed around the circumference of the body (110) of the electric vehicle charging station (10).

In an energy absorbing system (20) when multiple energy absorbing elements (22) are used, the individual elements can be stacked on top of one another or, optionally, can be removably attached to one another, such that an individual element can be removed if desired without having to remove the entire energy absorbing system (20) or alternatively, the energy absorbing elements (22) can be integral with one another (e.g., irremovably attached to one another) so that removal of an energy absorbing element (22) cannot be accomplished without removing the energy absorbing assembly (20) and/or damaging the energy absorbing assembly (20). When greater than one energy absorbing elements (22) are used, as mentioned, the energy absorbing elements (22) can be stacked on one another. In some embodiments, the energy absorbing elements (22) can be in communication with each other (e.g., touching).

The second wall (202) can define a partial cross-sectional shape that is complimentary to the external shape of the circumference of the electric vehicle charging station (10) and can be configured to cover greater than or equal to 50% of the circumference of the body of the electric vehicle charging station (10), specifically, 51% to 90%, more specifically 55% to 65%, and even more specifically, 75% to 85%. Accordingly, in an embodiment, the second wall (202) can define a partial circle, a partial square, or a partial polygon having greater than or equal to 3 sides. The energy absorbing system (20) can cover 2% to 99% of the electric vehicle charging station's major axis, specifically 5% to 95%, more specifically, 10% to 75%, and even more specifically, 25% to 50%, and any and all ranges and endpoints therebetween. The distance between connecting walls (210), e.g., the volume of the compartments (220) defined therein can vary. In some embodiments, additional walls can be located between the first wall (201) and the second wall (202), where the additional walls are dispersed at an angle (e.g., perpendicular) to the first wall (201) and the second wall (202). As such, compartments (220) can vary axially and/or peripherally in volume, area, shape, or a combination comprising at least one of the foregoing. Some or all of the compartments (220) can be filled with foam, which can be placed in a position configured to have the highest probability for impact by the bumper of an impacting vehicle.

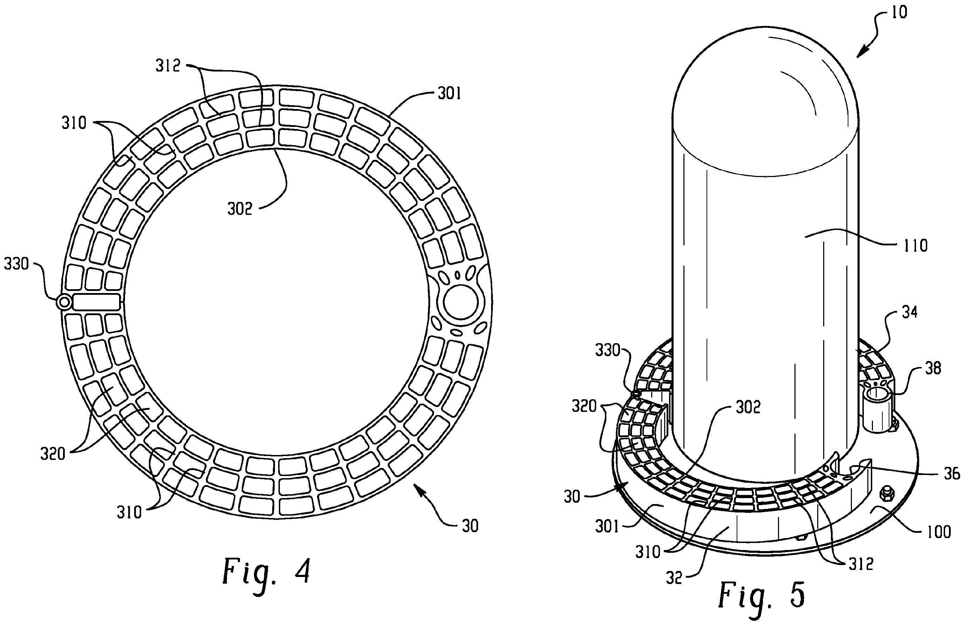

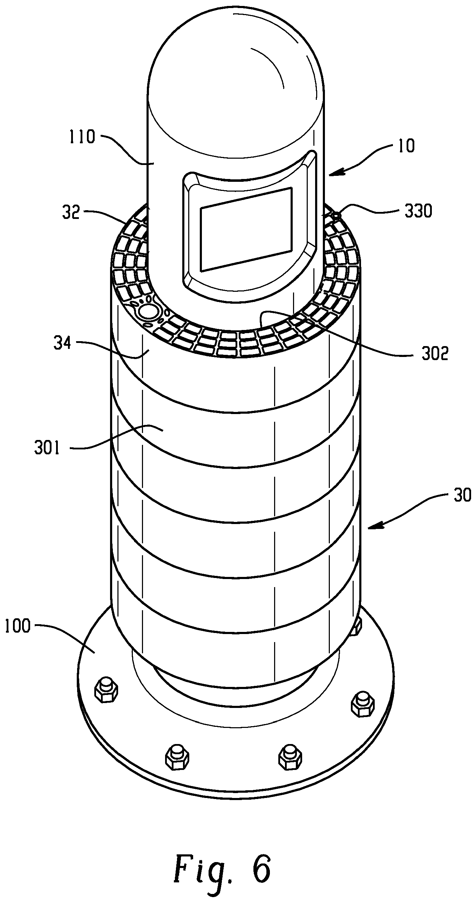

Turning now to Figures 4 to 6, another embodiment of an energy absorbing electric vehicle charging station (10) having an energy absorbing system (30) attached thereto is illustrated. As shown in Figures 5 and 6, the electric vehicle charging station (10) can comprise a base (100) with a body (110) having a major axis extending from the base (100). As illustrated in Figures 4 to 6, the energy absorbing system (30) can be configured to surround the entire circumference of the body (110) as opposed to covering a portion of the body (110) as illustrated in Figures 1 to 3. The first energy absorbing element (32) can connect to the second energy absorbing element (34) via a snap fit, a self-locking mechanism, or a tongue and groove interlocking system, etc. The first energy absorbing element (32) and the second energy absorbing element (34), can be adapted to provide a mating surface, wherein the mating surface of one element (e.g., 32) is complementary to the mating surface of the opposing element (e.g., 34) allowing for the elements to be coupled by various methods including, but not limited to, adhesion, cohesion, or other coupling means.

In other words, the energy absorbing system (30) can comprise a first energy absorbing element (32) that can be removably attached via an attachment mechanism (330) (e.g., a hinge) to a second energy absorbing element (34) where the first energy absorbing element (32) can comprise a female connecting portion (36) and the second energy absorbing element (34) can comprise a male connecting portion (38) configured to engage the female connecting portion (36). It is to be understood that, alternatively, the first energy absorbing element (32) can comprise the male connecting portion (38) and the second energy absorbing element (34) can comprise the female connecting portion (36).

The first energy absorbing element (32) and the second energy absorbing element (34) can be configured to encompass the circumference of the body (110) of the electric vehicle charging station (10) (e.g., the first energy absorbing element (32) and the second energy absorbing element (34) can be configured to cover 100% of the cross section of the circumference of the body (110 of the electric vehicle charging station (10). The circumference of the electric vehicle charging station (10) can be a polygon having a cross section perpendicular to the major axis of the body (110) that is a shape other than a circle.

As shown in Figures 4 and 5, the first energy absorbing element (32) and the second energy absorbing element (34) can each comprise a first wall (301), a second wall (302), and transverse walls (312) and ribs (310) disposed therebetween. The transverse walls (312) and ribs (310) can form discrete compartments (320) between the first wall (301) and the second wall (302).

In one embodiment, the first energy absorbing element (32) and the second energy absorbing element (34) can be hingedly connected to one another (see e.g., attachment mechanism (330) in Figure 5). The first energy absorbing element (32) and the second energy absorbing element (34) can also be configured to be self-locking as illustrated in Figure 4 when the female connecting portion (36) is inserted into the male connecting portion (38). The female connecting portion (36) and the male connecting portion (38) can be distally located from the attachment mechanism (330) of the first energy absorbing element (32) and the second energy absorbing element (34).

The number of energy absorbing elements (32, 34) that will surround the body (110) of the electric vehicle charging station (10) is not limited and can be any number needed to surround the body (110). For example, the number of energy absorbing elements surrounding the body (110) of the electric vehicle charging station (10) can be greater than or equal to 2, specifically, greater than or equal to 4, more specifically, greater than or equal to 5, still more specifically, greater than or equal to 6, and even more specifically, greater than or equal to 8. The energy absorbing system (30) can cover 2% to 99% of the electric vehicle charging station's (10) major axis, specifically 5% to 95%, more specifically, 10% to 75%, and even more specifically, 25% to 50%, and any and all ranges and endpoints therebetween.

As illustrated in Figures 4 to 6, an energy absorbing system (30) can be placed on the body (110) of an electric vehicle charging station (10) in an open position (see e.g., Figure 5) and subsequently the first energy absorbing element (32) can be connected to the second energy absorbing element (34). Optionally, the elements (32, 34) can be connected by a snap fit or tongue and groove locking mechanism. Elements (32, 34) can be stacked on a body (110), where the connecting region is vertically aligned can be spaced axially along the body (110), allowing for the replacement of individual energy absorbing systems (30) following impact or vandalism. Energy absorbing systems (30) can be positioned axially on the body of the electric vehicle charging station (10) at a height above the base (100) of electric vehicle charging system (10), where the energy absorbing systems (30) can be configured to protect the body (110) of the electric vehicle charging station (10) from an impacting vehicle's bumper thus saving replacement and/or repair costs of the electric vehicle charging station (10). Some or all of the compartments (320) can be filled with foam, which can be placed in a position configured to have the highest probability for impact by the bumper of an impacting vehicle.

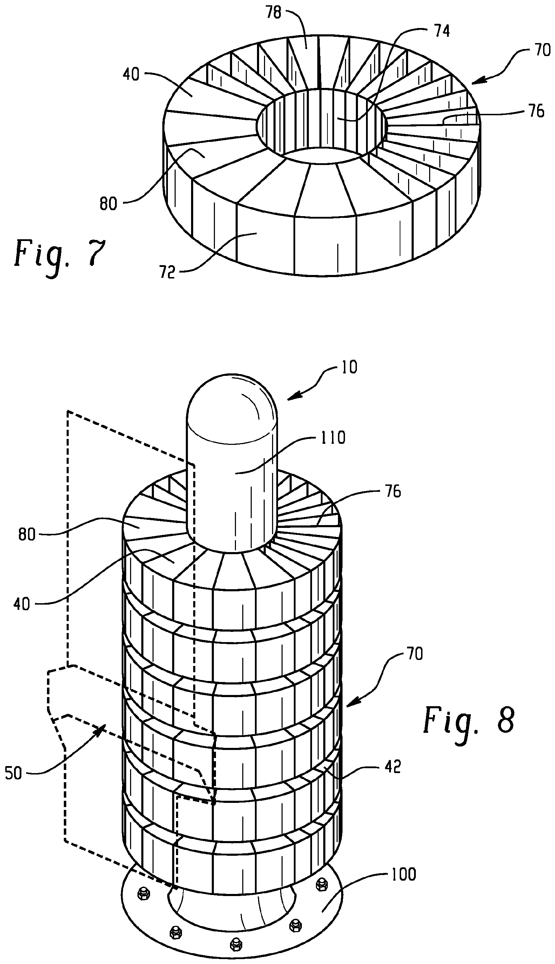

Optionally, any of the compartments as described herein can be filled with a foam material as previously described. The foam can provide an additional level of protection and energy absorption capabilities to the energy absorbing system. Turning now to Figures 7 and 8, an energy absorbing system (70) with optional foam filled compartments is illustrated. The energy absorbing system (70) can comprise a first wall (72), a second wall (74), and a connecting wall (76) dispersed therebetween the first wall (72) and the second wall (74). The first wall (72), second wall (74), and the connecting wall (76) can form a compartment (78). The compartment (78) can, optionally, be filled with foam (40) as illustrated in Figures 7 and 8. The first wall (72) and second wall (74) can have a curved cross-section, such that a ring shaped energy absorbing system (70) that can be fitted around (e.g., slid around the circumference) of a body (110) of an electric vehicle charging station (10) is formed. For example, the energy absorbing system (70) can be configured to cover 100% of the circumference of the cross section of the body (110) of an electric vehicle charging station (10). The first wall (72) and second wall (74) can form an energy absorbing system (70) defining a cross-section that is cylindrical, polygonal, triangular, square, pentagonal, hexagonal, octagonal, and so forth.

As mentioned, some of the compartments (78) formed (e.g., volume defined between connecting walls (76)) can be filled with foam (40). For example, greater than or equal to 25% of the compartments (78) can be filled with foam (40), specifically, greater than or equal to 50%, more specifically, greater than or equal to 75%, and even more specifically, greater than or equal to 99%. In other embodiments, 33% to 99% of the compartments (78) can be filled with foam, specifically, 45% to 75%, and more specifically, 50% to 65%. In one embodiment, the foam comprises a polyurethane foam. The energy absorbing system (70) can be rotated once placed onto the body (110) of the electric vehicle charging station (10) such that foam filled compartments (80) can be positioned to engage a charging vehicle such that any impact between a charging vehicle bumper (50) and the energy absorbing system (70) would be with the foam filled compartments (80) of the energy absorbing system (70). As illustrated in Figure 8, energy absorbing systems (70) can be stacked on the body (110) of an electric vehicle charging station (10), with an opening (42) (e.g., a space) maintained between two vertically stacked energy absorbing systems (70). Such a configuration can allow for the replacement of individually damaged energy absorbing systems (70) following an impact or other damage causing event, thereby reducing the costs and expediting repair of the energy absorbing system (70).

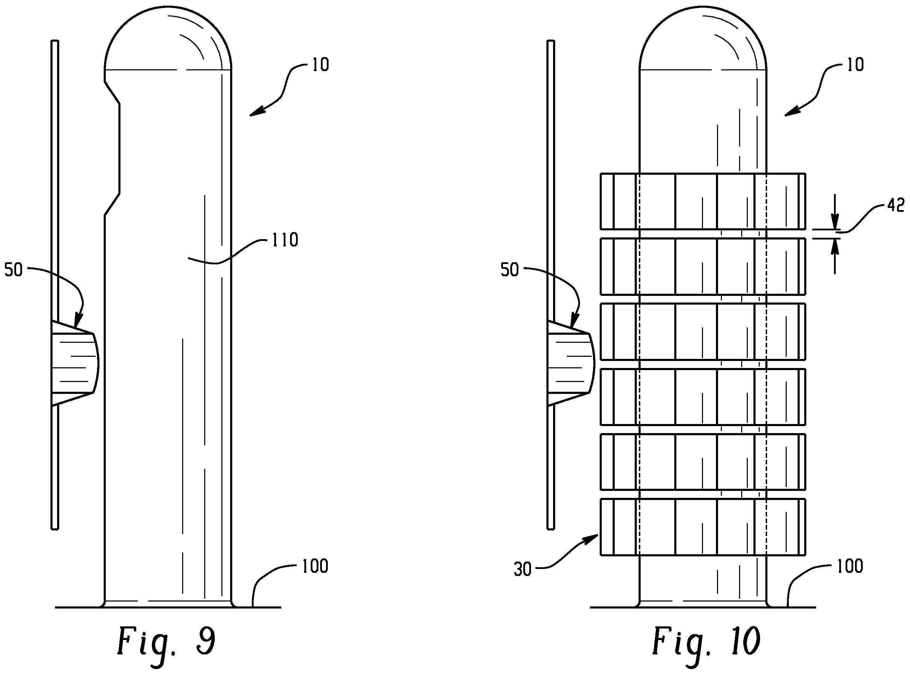

Figure 9 illustrates the point of impact between an impacting, charging vehicle bumper (50) and an unprotected electric vehicle charging station (10) with a base (100) attached to a structure (e.g., a sidewalk) and a body (110) extending from the base (100). Conversely Figure 10 illustrates the point of impact between an impacting vehicle bumper (50) and an electric vehicle charging station (10) protected with the energy absorbing system (70) described with respect to Figures 7 and 8. As can be seen in Figures 9 and 10, the bumper (50) will directly contact the body (110) of the electric vehicle charging station (10) in Figure 9, but will contact the energy absorbing system (70) in Figure 10, thereby protecting the electric vehicle charging station (10) from damage.

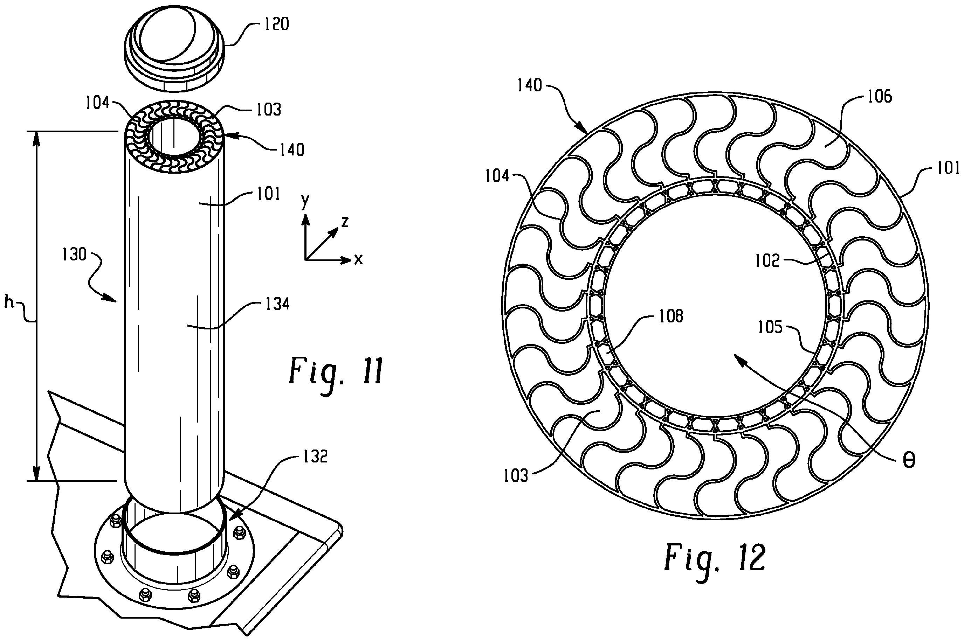

Figures 11 and 12 illustrate an embodiment of an electric vehicle charging station (130) comprising a base (132) and a body (134) extending therefrom along the major axis, y, of the electric vehicle charging station (130). As illustrated in Figures 11 and 12, the body (134) can comprise an energy absorbing system (140) extending along the height, *h*, of the body (134) to provide intrinsic energy absorbing capabilities to the electric vehicle charging station (130). As illustrated in Figure 11, a cap (120) can be operably connected to the body (134).

Figure 12 illustrates a cross-section of the body (134) in Figure 11, which forms energy absorbing system (140). The energy absorbing system (140) can comprise a first wall (101) and a second wall (102), which define a first section (103) of the energy absorbing system (140). Dispersed throughout the first section (103) can be connecting walls (104), which can form compartments (106) of varying shapes and size that can provide a varying degree of energy absorption and distribution upon impact with a charging vehicle. The second wall (102) and a third wall (105) can form a second section (108) with openings dispersed throughout the second section (108) to provide further energy absorbing capabilities to the body (134). The second wall (102) can define a second wall area (*θ*) having a circular or polygonal cross-section. In an embodiment, the first wall (101) can define a first wall area having a circular or polygonal cross-sectional area. The first cross-sectional area and the second cross-sectional area of the energy absorbing system (140) can vary axially from the base (132) to the cap (120).

Methods of making the energy absorbing systems disclosed herein are also contemplated. For example, an energy absorbing system can be formed by extruding an energy absorbing system comprising a first wall, a second wall, and a connecting wall disposed therebetween. Alternatively, the energy absorbing system can be injection molded.

A method of protecting an electric vehicle charging station can comprise attaching an energy absorbing system as disclosed and described herein to a body of an electric vehicle charging station. The energy absorbing system can be an integral system, meaning that it cannot be separated without damaging the energy absorbing system, or the energy absorbing system can be a multi-component system where elements are removable attached or coupled together to allow removal and replacement of energy absorbing systems that are damaged following an impact with a charging body.

The energy absorbing systems disclosed herein can, optionally, be fitted with communication elements configured to enable communication between the electric vehicle charging station and the charging vehicle, receiving and transmitting proximity data, or can also control an approaching vehicle's approach to the electric vehicle charging station. These communication elements can be a radio frequency identification device (RFID) configured to communicate with a complimentary receiver device in the approaching vehicle. The communication elements can also be a wireless area network (WAN) device configured to communicate with or control an on-board WAN enabled computer. Also contemplated are devices such as blue tooth communication devices.

An outer wall of the energy absorbing systems described herein (e.g., the first wall) can, optionally, be coated or impregnated with a chemiluminescent, fluorescent or phosphorescent coating to increase the visibility to approaching vehicles. Likewise, electroluminescent layers, such as organic light emitting diodes (OLED) or polymeric light emitting diodes (LED) can, optionally, be incorporated to a portion of an outer wall of the energy absorbing system and can, optionally be configured to face an approaching vehicle. The wall of the energy absorbing element (e.g., the first wall and/or the second wall) can be configured to receive and display advertisements or other information.

The impact energy that the electric vehicle charging stations described herein can be subjected to can be 500 Joules to 2,000 Joules. With the energy absorbing systems described herein, when subjected to an impact with such an energy, the electric vehicle charging stations can suffer no damage to the internal components of the electric vehicle charging station.

As described herein, the energy absorbing system, in one embodiment, can be operably coupled to the electric vehicle charging station. Operably coupled refers to the joining of the energy absorbing system and the electric vehicle charging station directly or indirectly to one another. Such joining may be stationary in nature or moveable in nature. Such joining may be permanent in nature or alternatively may be removable or releasable in nature and can be accomplished using connection elements such as screws, snaps, adhesive, clips, rivets and the like or combination comprising at least one of the foregoing.

The following examples are merely illustrative of the device disclosed herein and are not intended to limit the scope hereof. All of the following examples were based upon numerical simulations unless specifically stated otherwise.

### EXAMPLES

### Example 1:

An electric vehicle charging station having an energy absorbing system with the design illustrated in Figure 2 is tested for various properties as described and compared to the same electric vehicle charging station without an energy absorbing system. Comparative Sample 1 (C1) corresponds to the electric vehicle charging station without the energy absorbing system, while Sample 1 corresponds to the electric vehicle charging station having an energy absorbing system with the design illustrated in Figure 2. The energy absorbing system comprises polycarbonate (e.g., LEXAN*, commercially available from SABIC Innovative Plastics). The samples are tested by impacting the electric vehicle charging station by a vehicle moving at a speed of 8 kilometers per hour (kph) (5 miles per hour (mph) giving a total energy of 740 Joules (J).

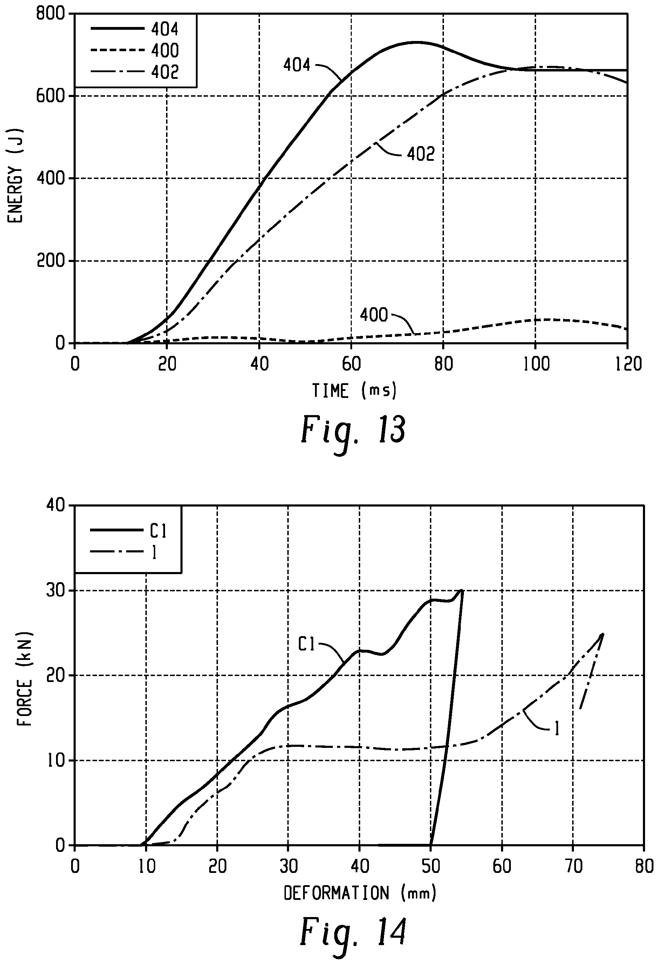

Figure 13 illustrates the energy distribution curve of an electric vehicle charging station following an 8 kph (5 kph) collision where energy is measured in Joules and time is measured in milliseconds (ms). As can be seen from Figure 13, the body of the electric vehicle charging station is subjected to greater than 10 times higher impact energy without an energy absorbing system (C1) as compared to Sample 1, where 400 indicates the energy absorbed by the body of the electric vehicle charging station with the energy absorbing system attached and 402 indicates the energy absorbed by the energy absorbing system; 404 indicates the energy absorbed by the electric vehicle charging station without an energy absorbing system. These results demonstrate that the most energy is absorbed by the energy absorbing system rather than the electric vehicle charging station, thus, only a low amount of energy is transferred to the electric vehicle charging station. Figure 14 illustrates the force versus deformation of C1 and Sample 1, where the force versus deformation curve shows less than 15 kiloNewtons (kN) absorbed by the electric vehicle charging station comprising an energy absorbing system of Sample 1 at 55 mm intrusion following an 8 kph (5 mph) collision, compared to 30 kN absorbed by C1 having an unprotected electric vehicle charging station.

### Example 2:

An electric vehicle charging station having an energy absorbing system with the design illustrated in Figure 8 is tested for various properties as described and compared to the same electric vehicle charging station without an energy absorbing system. Comparative Sample 2 (C2) corresponds to the electric vehicle charging station without the energy absorbing system, while Sample 2 corresponds to the electric vehicle charging station having an energy absorbing system with the design illustrated in Figure 8. The energy absorbing system comprises polycarbonate (e.g., LEXAN*, commercially available from SABIC Innovative Plastics). The samples are tested by impacting the electric vehicle charging station by a vehicle moving at a speed of 8 kilometers per hour (kph) (5 miles per hour (mph) giving a total energy of 740 Joules (J).

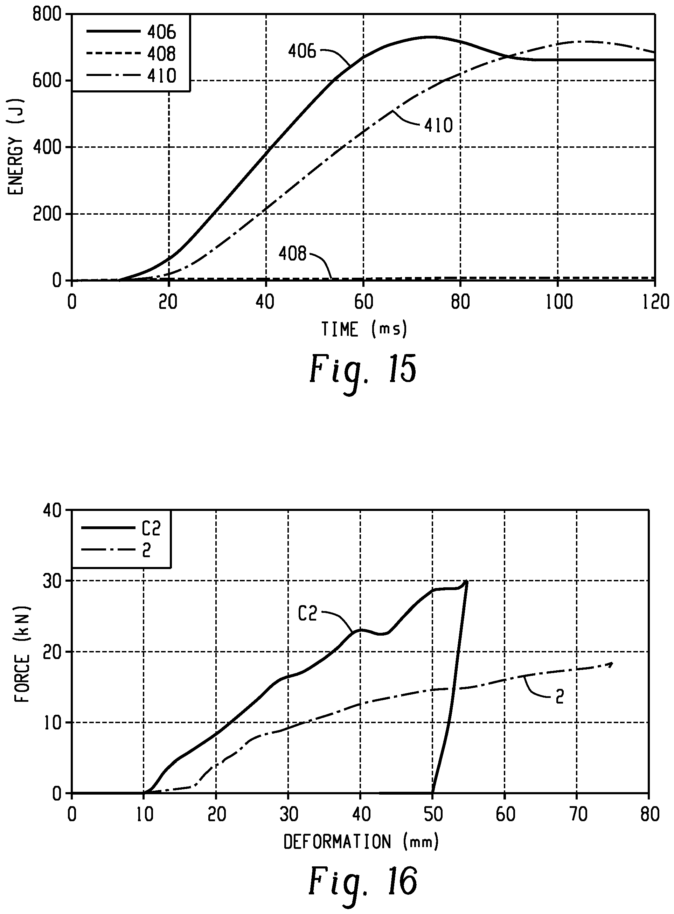

Figure 15 illustrates the energy distribution curve of an electric vehicle charging station following an 8 kph (5 kph) collision where energy is measured in Joules and time in milliseconds. As can be seen from Figure 15, the body of the electric vehicle charging station is subjected to greater than 10 times higher impact energy without an energy absorbing system (C2) as compared to Sample 2, where 408 indicates the energy absorbed by the body of the electric vehicle charging station with the energy absorbing system attached and 410 indicates the energy absorbed by the energy absorbing system; 406 indicates the energy absorbed by the electric vehicle charging station without an energy absorbing system (C2). These results demonstrate that the most energy is absorbed by the energy absorbing system rather than the electric vehicle charging station, thus, only a low amount of energy is transferred to the electric vehicle charging station. Figure 16 illustrates the force versus deformation of C2 and Sample 2, where the force versus deformation curve shows less than 15 kiloNewtons (kN) absorbed by the electric vehicle charging station comprising an energy absorbing system of Sample 2 at 52 mm intrusion following a 8 kph (5 mph) collision, compared to 30 kN absorbed by C2 having an unprotected electric vehicle charging station.

### Example 3:

An electric vehicle charging station have an energy absorbing system with the design illustrated in Figure 12 is tested for various properties as described and compared to the same electric vehicle charging station without an energy absorbing system. Comparative Sample 3 (C3) corresponds to the electric vehicle charging station without the energy absorbing system, while Sample 3 corresponds to the electric vehicle charging station having an energy absorbing system with the design illustrated in Figure 12. The energy absorbing system comprises polycarbonate (e.g., LEXAN*, commercially available from SABIC Innovative Plastics). The samples are tested by impacting the electric vehicle charging station by a vehicle moving at a speed of 8 kilometers per hour (kph) (5 miles per hour (mph) giving a total energy of 740 Joules (J).

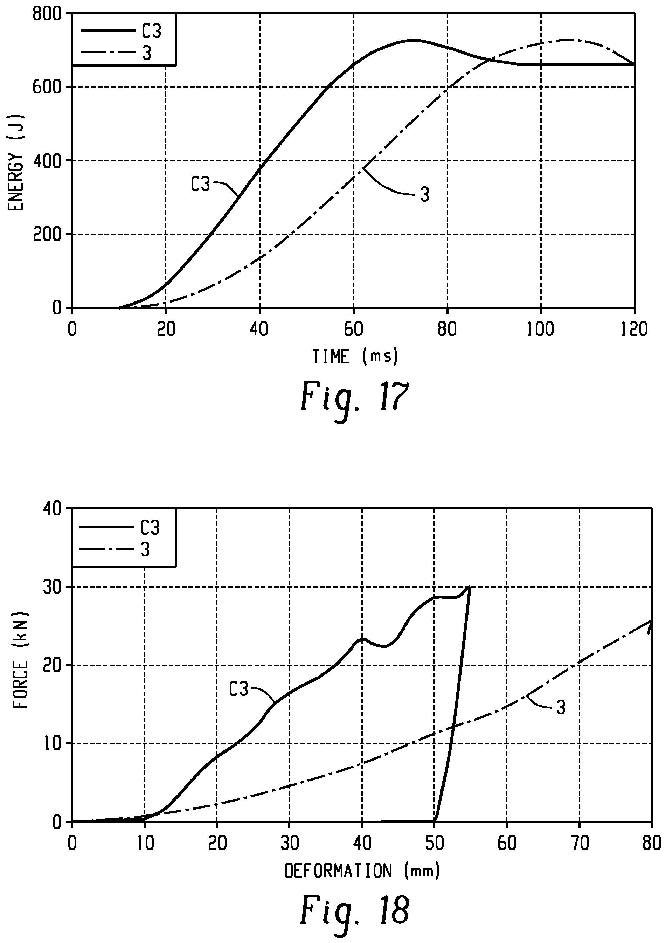

Figure 17 illustrates the energy distribution curve of an electric vehicle charging station following an 8 kph (5 kph) collision where energy is measured in Joules and time in milliseconds. As can be seen from Figure 17, the body of the electric vehicle charging station is subjected to greater than 10 times higher impact energy without an energy absorbing system (C3) as compared to Sample 3. Figure 18 illustrates the force versus deformation of C3 and Sample 3, where the force versus deformation curve shows less than 15 kiloNewtons (kN) absorbed by the electric vehicle charging station comprising an energy absorbing system of Sample 3 at 55 mm intrusion following an 8 kph (5 mph) collision, compared to 30 kN absorbed by C3 having an unprotected electric vehicle charging station.

In one embodiment, an electric vehicle charging station comprises: a base and a body extending from the base along a major axis of the electric vehicle charging station; and an energy absorbing system comprising a first wall, a second wall, and a connecting wall disposed therebetween the first wall and the second wall creating a compartment; wherein the body receives the energy absorbing system; and wherein the energy absorbing system is configured to engage an impacting object.

In another embodiment, an electric vehicle charging station, comprises: a base and a body extending from the base along a major axis of the electric vehicle charging station; and an energy absorbing system comprising a first energy absorbing element and a second energy absorbing element, wherein the first energy element and the second energy absorbing element are attached at an end of each element, and wherein the first energy absorbing element has a first mating surface that is complimentary to a second mating surface on the second energy absorbing element at a distal end.

In another embodiment, an electric vehicle charging station comprises: a base; and a body extending from the base along a major axis of the electric vehicle charging station, wherein the body comprises an energy absorbing system comprising a first wall, a second wall, and a connecting wall disposed therebetween the first wall and the second wall creating a compartment; wherein the energy absorbing system is configured to engage an impacting object.

In one embodiment, a method of protecting an electric vehicle charging station, comprises: attaching an energy absorbing system to a body of an electric vehicle charging station, wherein the energy absorbing system comprises a first wall, a second wall, and a connecting wall disposed therebetween the first wall and the second wall creating a compartment, the first wall of the energy absorbing system is configured to engage an impacting object.

In the various embodiments, (i) the energy absorbing system comprises a material selected from the group consisting of a thermoplastic material, a thermoset material, a composite material, an elastomeric material, a foam material, and combinations comprising at least one of the foregoing; and/or (ii) the energy absorbing system is configured to cover 2% to 99% of the body of the electric vehicle charging station along the major axis; and/or (iii) the energy absorbing system covers greater than or equal to 50% of a circumference of the body; and/or (iv) the shape of the connecting wall is selected from the group consisting of curved, straight, and combinations comprising at least one of the foregoing; and/or (v) the compartment comprises a shape selected from the group consisting of circular, square, rectangle, triangle, trapezoidal, polygonal, and combinations comprising at least one of the foregoing; and/or (vi) the compartment is hollow or filled with a foam material; and/or (vii) the first wall of the energy absorbing system is configured to engage an impacting object; and/or (viii) the energy absorbing system is configured to cover 100% of a circumference of the body when the first mating surface and the second mating surface are attached; and/or (ix) the first energy absorbing element and the second energy absorbing element are connected by an attachment mechanism selected from the group consisting of snap fit, tongue and groove, self-locking, and combinations comprising at least one of the foregoing.

All ranges disclosed herein are inclusive of the endpoints, and the endpoints are independently combinable with each other (e.g., ranges of "up to 25 wt.%, or, more specifically, 5 wt.% to 20 wt.%", is inclusive of the endpoints and all intermediate values of the ranges of "5 wt.% to 25 wt.%," etc.). "Combination" is inclusive of blends, mixtures, alloys, reaction products, and the like. Furthermore, the terms "first," "second," and the like, herein do not denote any order, quantity, or importance, but rather are used to differentiate one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. "Optional" or "optionally" means that the subsequently described event or circumstance can or cannot occur, and that the description includes instances where the event occurs and instances where it does not.

All cited patents, patent applications, and other references are incorporated herein by reference in their entirety. However, if a term in the present application contradicts or conflicts with a term in the incorporated reference, the term from the present application takes precedence over the conflicting term from the incorporated reference.

As used herein, approximating language may be applied to modify any quantitative representation that may vary without resulting in a change in the basic function to which it is related. Accordingly, a value modified by a term or terms, such as "about" and "substantially," may not to be limited to the precise value specified, in some cases. In at least some instances, the approximating language may correspond to the precision of an instrument for measuring the value.

While particular embodiments have been described, alternatives, modifications, variations, improvements, and substantial equivalents that are or may be presently unforeseen may arise to applicants or others skilled in the art.

## Claims

1. An electric vehicle charging station (10, 130), comprising:
a base (100, 132) and a body (110, 134) extending from the base along a major axis of the electric vehicle charging station (10);
an energy absorbing system (20,30, 70, 140) comprising a first energy absorbing element (22, 32);
wherein the first energy absorbing element (22, 32, 34) comprises a first wall (201, 301, 72, 101), a second wall (202, 302, 74, 102), and a connecting wall (210, 104, 76, 104) disposed therebetween the first wall and the second wall creating a compartment (220, 320, 80, 106);
wherein the body (110, 134) receives the energy absorbing system (20, 30, 70, 140);
wherein the first wall (201, 301, 72, 101) of the first energy absorbing element (22, 32, 34) is configured to engage an impacting object;
wherein the second wall (202, 302, 74, 102) of the first energy absorbing element (22, 32, 34) is configured to cover 51% to 90% of a circumference of the body (110, 134);
wherein the energy absorbing system (20, 30, 70, 140) further comprises a second energy absorbing element (34), wherein the second energy absorbing element (34) comprises a first wall (201), a second wall (202), and a connecting wall (210) disposed therebetween the first wall and the second wall creating a compartment (220);
wherein the first energy absorbing element (32) is attached to the second energy absorbing element (34) via an attachment mechanism (330);
wherein the first energy absorbing element has a first mating surface that is complimentary to a second mating surface on the second energy absorbing element; and
wherein the first mating surface and the second mating surface are distally located from the attachment mechanism (330);
wherein the energy absorbing system is configured to engage an impacting object.

2. The electric vehicle charging station (10) of Claim 1, wherein the energy absorbing system comprises a material selected from the group consisting of a thermoplastic material, a thermoset material, a composite material, an elastomeric material, a foam material, and combinations comprising at least one of the foregoing.

3. The electric vehicle charging station (10) of any of Claims 1-2, wherein the energy absorbing system is configured to cover 2% to 99% of the body (110) of the electric vehicle charging station (10) along the major axis.

4. The electric vehicle charging station (10) of any of Claims 1-3, wherein the energy absorbing system (20) covers 75% to 85% of a circumference of the body.

5. The electric vehicle charging station (10) of any of Claims 1-4, wherein the shape of the connecting wall (210) is selected from the group consisting of curved, straight, and combinations comprising at least one of the foregoing.

6. The electric vehicle charging station (10) of any of Claims 1-5, wherein the compartment (220,320) comprises a shape selected from the group consisting of circular, square, rectangle, triangle, trapezoidal, polygonal, and combinations comprising at least one of the foregoing.

7. The electric vehicle charging station (10) of any of Claims 1-6, wherein the compartment (220,320) is hollow or filled with a foam material.

8. The electric vehicle charging station (10) of any of Claims 1-7, wherein the first wall (201,301) of the energy absorbing system is configured to engage an impacting object.

9. The electric vehicle charging station (10) of Claim 1, wherein the energy absorbing system (30) is configured to cover 100% of a circumference of the body when the first mating surface and the second mating surface are attached.

10. The electric vehicle charging station (10) of any of Claims 1-9, wherein the first mating surface and the second mating surface are selected from the group consisting of snap fit, tongue and groove, self-locking, and combinations comprising at least one of the foregoing.

11. The electric vehicle charging station (10) of any of Claims 1-10, wherein the energy absorbing system (30) is configured to cover 10% to 75% of the body of the electric vehicle charging station along the major axis.

12. A method of protecting an electric vehicle charging station, comprising:
attaching an energy absorbing system of any of Claims 1-11 to a body of an electric vehicle charging station.

13. The electric vehicle charging station (10) of Claim 1, wherein the energy absorbing system (20) comprises greater than one energy absorbing element (22), wherein the energy absorbing elements (22) are stacked, and wherein the energy absorbing elements (22) are removably attached.

14. The electric vehicle charging station of any of Claims 1-11, wherein the first energy absorbing element (32) and the second energy absorbing element (34) each further comprise transverse walls (312) disposed between the first wall and the second wall without intersecting the first wall (301) or the second wall (302), and ribs (310) disposed between the first wall (301) and the second wall (302) and intersecting the transverse wall (312).

## Patentansprüche

1. Eine Elektrofahrzeug-Ladestation (10, 130), umfassend:
eine Basis (100, 132) und eine Karosserie (110, 134), die sich von der Basis entlang einer Hauptachse der Elektrofahrzeug-Ladestation (10) erstreckt;
ein Energieabsorptionssystem (20, 30, 70, 140), umfassend ein erstes Energieabsorptionselement (22, 32);
worin das erste Energieabsorptionselement (22, 32, 34) eine erste Wand (201, 301, 72, 101), eine zweite Wand (202, 302, 74, 102), und eine verbindende Wand (210, 104, 76, 104) umfasst, die dort zwischen der ersten Wand und der zweiten Wand angeordnet ist und ein Kompartiment (220, 320, 80, 106) bildet;
worin die Karosserie (110, 134) das Energieabsorptionssystem (20, 30, 70, 140) erhält;
worin die erste Wand (201, 301, 72, 101) des ersten Energieabsorptionselements (22, 32, 34) konfiguriert ist, um ein aufprallendes Objekt zu erfassen;
worin die zweite Wand (202, 302, 74, 102) des ersten Energieabsorptionselements (22, 32, 34) so konfiguriert ist, dass sie 51% bis 90% eines Umfangs der Karosserie (110, 134) abdeckt;
worin das Energieabsorptionssystem (20, 30, 70, 140) ferner ein zweites Energieabsorptionselement (34) umfasst, worin das zweite Energieabsorptionselement (34) eine erste Wand (201), eine zweite Wand (202) und eine verbindende Wand (210) umfasst, die dort zwischen der ersten Wand und der zweiten Wand angeordnet ist und ein Kompartiment (220) bildet;
worin das erste Energieabsorptionselement (32) an dem zweiten Energieabsorptionselement (34) über einen Befestigungsmechanismus (330) angebracht ist;
worin das erste Energieabsorptionselement eine erste Gegenfläche aufweist, die komplementär zu einer zweiten Gegenfläche auf dem zweiten Energieabsorptionselement ist: und worin die erste Gegenfläche und die zweite Gegenfläche distal vom Befestigungsmechanismus angeordnet sind (330);
worin das Energieabsorptionssystem konfiguriert ist, um ein aufprallendes Objekt zu erfassen.

2. Die Elektrofahrzeug-Ladestation (10) nach Anspruch 1, worin das Energieabsorptionssystem ein Material umfasst, ausgewählt aus der Gruppe bestehend aus einem thermoplastischen Material, einem duroplastischen Material, einem Komposit-Material, einem elastomeren Material, einem Schaumstoff, und Kombinationen, die mindestens eine der vorstehenden umfassen.

3. Die Elektrofahrzeug-Ladestation (10) nach einem der Ansprüche 1-2, worin das Energieabsorptionssystem so konfiguriert ist, dass es 2% bis 99% der Karosserie (110) der Elektrofahrzeug-Ladestation (10) entlang der Hauptachse abdeckt.

4. Die Elektrofahrzeug-Ladestation (10) nach einem der Ansprüche 1-3, worin das Energieabsorptionssystem (20) 75%-85% des Umfangs der Karosserie abdeckt.

5. Die Elektrofahrzeug-Ladestation (10) nach einem der Ansprüche 1-4, worin die Form der verbindenden Wand (210) ausgewählt ist aus der Gruppe bestehend aus kurvenförmigen, geraden und Kombinationen, umfassend mindestens eines der vorstehenden.

6. Die Elektrofahrzeug-Ladestation (10) nach einem der Ansprüche 1-5, worin das Kompartiment (220, 320) eine Form umfasst, ausgewählt aus der Gruppe bestehend aus kreisförmig, quadratisch, rechteckig, dreieckig, trapezförmig, polygonal und Kombinationen aus mindestens einem der vorstehenden.

7. Die Elektrofahrzeug-Ladestation (10) nach einem der Ansprüche 1-6, worin das Kompartiment (220, 320) hohl oder mit einem Schaumstoff gefüllt ist.

8. Die Elektrofahrzeug-Ladestation (10) nach einem der Ansprüche 1-7, worin die erste Wand (201, 301) des Energieabsorptionssystems konfiguriert ist, um ein aufprallendes Objekt zu erfassen.

9. Die Elektrofahrzeug-Ladestation (10) nach Anspruch 1, worin das Energieabsorptionssystem (30) konfiguriert ist, um 100% eines Umfangs der Karosserie abzudecken, wenn die erste Gegenfläche und die zweite Gegenfläche angebracht sind.

10. Die Elektrofahrzeug-Ladestation (10) nach einem der Ansprüche 1-9, worin die erste Gegenfläche und die zweite Gegenfläche ausgewählt sind aus der Gruppe bestehend aus Schnappverbindung, Nut und Feder, selbstschließend und Kombinationen, umfassend mindestens eines der vorstehenden.

11. Die Elektrofahrzeug-Ladestation (10) nach einem der Ansprüche 1-10, worin das Energieabsorptionssystem (30) so konfiguriert ist, dass es 10% bis 75% der Karosserie der Elektrofahrzeug-Ladestation entlang der Hauptachse abdeckt.

12. Ein Verfahren zum Schutz einer elektrischen Ladestation, umfassend: Anbringen eines Energieabsorptionssystems nach einem der Ansprüche 1-11 an eine Karosserie einer Elektrofahrzeug-Ladestation.

13. Die Elektrofahrzeug-Ladestation (10) nach Anspruch 1, worin das Energieabsorptionssystem (20) mehr als ein Energieabsorptionselement (22) umfasst, worin die Energieabsorptionselemente (22) gestapelt sind und worin die Energieabsorptionselemente (22) abnehmbar befestigt sind.

14. Die Elektrofahrzeug-Ladestation nach einem der Ansprüche 1-11, worin das erste Energieabsorptionselement (32) und das zweite Energieabsorptionselement (34) jeweils außerdem Querwände (312) aufweisen, angeordnet zwischen der ersten Wand und der zweiten Wand, ohne die erste Wand (301) oder die zweite Wand (302) zu schneiden, und Rippen (310), angeordnet zwischen der ersten Wand (301) und der zweiten Wand (302), welche die Querwand (312) schneiden.

## Revendications

1. Borne de recharge pour véhicules électriques (10, 130), comprenant :
une base (100, 132) et un corps (110, 134) s'étendant depuis la base le long d'un axe majeur de la borne de recharge pour véhicules électriques (10) ;
un système absorbant de l'énergie (20, 30, 70, 140) comprenant un premier élément absorbant de l'énergie (22, 32) ;
dans laquelle le premier élément absorbant de l'énergie (22, 32, 34) comprend une première paroi (201, 301, 72, 101), une seconde paroi (202, 302, 74, 102) et une paroi de jonction (210, 104, 76, 104) disposée entre celles-ci, la première paroi et la seconde paroi créant un compartiment (220, 320, 80, 106) ;
dans laquelle le corps (110, 134) reçoit le système absorbant de l'énergie (20, 30, 70, 140) ;
dans laquelle la première paroi (201, 301, 72, 101) du premier élément absorbant de l'énergie (22, 32, 34) est configurée pour engager un objet impacteur ;
dans laquelle la seconde paroi (202, 302, 74, 102) du premier élément absorbant de l'énergie (22, 32, 34) est configurée pour recouvrir 51 % à 90 % d'une circonférence du corps (110, 134) ;
dans laquelle le système absorbant de l'énergie (20, 30, 70, 140) comprend en outre un second élément absorbant de l'énergie (34), lequel second élément absorbant de l'énergie (34) comprend une première paroi (201), une seconde paroi (202) et une paroi de jonction (210) disposée entre celles-ci, la première paroi et la seconde paroi créant un compartiment (220) ;
dans laquelle le premier élément absorbant de l'énergie (32) est attaché au second élément absorbant de l'énergie (34) par l'intermédiaire d'un mécanisme d'attachement (330) ;
dans laquelle le premier élément absorbant de l'énergie a une première surface de contact qui est complémentaire à une seconde surface de contact sur le second élément absorbant de l'énergie ; et
dans laquelle la première surface de contact et la seconde surface de contact sont disposées distalement par rapport au mécanisme d'attachement (330) ;
dans laquelle le système absorbant de l'énergie est configuré pour engager un objet impactant.

2. Borne de recharge pour véhicules électriques (10) selon la revendication 1, dans laquelle le système absorbant de l'énergie comprend un matériau choisi dans le groupe constitué par un matériau thermoplastique, un matériau thermodurcissable, un matériau composite, un matériau élastomère, un matériau en mousse, et les combinaisons comprenant au moins l'un des précités.

3. Borne de recharge pour véhicules électriques (10) selon l'une quelconque des revendications 1-2, dans laquelle le système absorbant de l'énergie est configuré pour recouvrir 2 % à 99 % du corps (110) de la borne de recharge pour véhicules électriques (10) le long de l'axe majeur.

4. Borne de recharge pour véhicules électriques (10) selon l'une quelconque des revendications 1 à 3, dans laquelle le système absorbant de l'énergie (20) recouvre 75 % à 85 % d'une circonférence du corps.

5. Borne de recharge pour véhicules électriques (10) selon l'une quelconque des revendications 1 à 4, dans laquelle la forme de la paroi de jonction (210) est choisie dans le groupe constitué par incurvée, rectiligne et les combinaisons comprenant au moins l'une des précitées.

6. Borne de recharge pour véhicules électriques (10) selon l'une quelconque des revendications 1 à 5, dans laquelle le compartiment (220, 320) comprend une forme choisie dans le groupe constitué par circulaire, carrée, rectangulaire, triangulaire, trapézoïdale, polygonale, et les combinaisons comprenant au moins l'une des précitées.

7. Borne de recharge pour véhicules électriques (10) selon l'une quelconque des revendications 1 à 6, dans laquelle le compartiment (220, 320) est creux ou rempli avec un matériau en mousse.

8. Borne de recharge pour véhicules électriques (10) selon l'une quelconque des revendications 1 à 7, dans laquelle la première paroi (201, 301) du système absorbant de l'énergie est configurée pour engager un objet impactant.

9. Borne de recharge pour véhicules électriques (10) selon la revendication 1, dans laquelle le système absorbant de l'énergie (30) est configuré pour recouvrir 100 % d'une circonférence du corps lorsque la première surface de contact et la seconde surface de contact sont attachées.

10. Borne de recharge pour véhicules électriques (10) selon l'une quelconque des revendications 1 à 9, dans laquelle la première surface de contact et la seconde surface de contact sont choisies dans le groupe constitué par enclenchement, rainure et languette, autoblocage et les combinaisons comprenant au moins l'un des précités.

11. Borne de recharge pour véhicules électriques (10) selon l'une quelconque des revendications 1 à 10, dans laquelle le système absorbant de l'énergie (30) est configuré pour recouvrir 10 % à 75 % du corps de la borne de recharge pour véhicules électriques le long de l'axe majeur.

12. Procédé de protection d'une borne de recharge pour véhicules électriques, comprenant :
l'attachement d'un système absorbant de l'énergie selon l'une quelconque des revendications 1 à 11 à un corps d'une borne de recharge pour véhicules électriques.

13. Borne de recharge pour véhicules électriques (10) selon la revendication 1, dans laquelle le système absorbant de l'énergie (20) comprend plus qu'un élément absorbant de l'énergie (22), dans laquelle les éléments absorbant de l'énergie (22) sont empilés, et dans laquelle les éléments absorbant de l'énergie (22) sont attachés de façon amovible.

14. Borne de recharge pour véhicules électriques selon l'une quelconque des revendications 1 à 11, dans laquelle le premier élément absorbant de l'énergie (32) et le second élément absorbant de l'énergie (34) comprennent chacun en outre des parois transversales (312) disposées entre la première paroi et la seconde paroi sans couper la première paroi (301) ou la seconde paroi (302), et des arêtes (310) disposées entre la première paroi (301) et la seconde paroi (302) et coupant la paroi transversale (312).
